# EUROPEAN PATENT SPECIFICATION

(11) **EP 1 942 625 B1**
(45) Date of publication and mention of the grant of the patent: **09.03.2016**
(21) Application number: 07022574.3
(22) Date of filing: 21.11.2007
(51) Int. Cl.: H04L 29/06, H04W 12/02

(54) **Method and apparatus for performing ciphering in a wireless communications system**
Verfahren und Vorrichtung zur Verschlüsselung in einem drahtlosen Kommunikationssystem
Procédé et appareil pour effectuer le chiffrage dans un système de communications sans fil

(30) Priority: 21.11.2006 US 860223 P
(43) Date of publication of application: 09.07.2008
(73) Proprietor: Innovative Sonic Limited, Ebene 72201 (MU)
(72) Inventor: Jiang, Sam Shiaw-Shiang, Peitou Taipei City (TW)
(74) Representative: Hoefer & Partner Patentanwälte mbB

(56) References cited:
- 3GPP RAN WG2: "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release x), TS 36.300 V0.1.0" 3GPP TECHNICAL SPECIFICATIONS, [Online] 1 November 2006 (2006-11-01), pages 1-50, XP002483486 Retrieved from the Internet: URL:http://www.3gpp.org/ftp/tsg_ran/WG2_RL 2/TSGR2_56/Documents/R2-063057.zip> [retrieved on 2008-06-09]
- SAMSUNG ET AL: "PDCP for E-UTRAN, R2-060906" INTERNET CITATION, [Online] 27 March 2006 (2006-03-27), - 31 March 2006 (2006-03-31) pages 1-3, XP002464337 Retrieved from the Internet: URL:http://www.3gpp.org/ftp/tsg_ran/WG2_RL 2/TSGR2_52/Documents/R2-060906.zip> [retrieved on 2008-01-11]
- "Universal Mobile Telecommunications System (UMTS); 3G security; Security architecture (3GPP TS 33.102 version 7.0.0 Release 7); ETSI TS 133 102" ETSI STANDARDS, LIS, vol. 3-SA3, no. V7.0.0, 1 December 2005 (2005-12-01), pages 1-64, XP014032863 ISSN: 0000-0001
- NOKIA ET AL: "MAC, RLC and RRC Layer Security" S3-060456, 3GPP TSG SA WG3 SECURITY #44, TALLINN, ESTONIA,, vol. S3-060456, 11 July 2006 (2006-07-11), pages 1-4, XP003022038

## Description

This application claims the benefit of U.S. Provisional Application No. 60/860,223, filed on Nov 21, 2006 and entitled "Security structure for LTE".

The present invention relates to a method and apparatus for configuring signaling radio bearer in a wireless communications system according to the pre-characterizing clauses of claims 1, 4, 7, 10, 13 and 16.

The third generation (3G) mobile telecommunications system provides high frequency spectrum utilization, universal coverage, and high quality, high-speed multimedia data transmission, and also meets all kinds of QoS requirements simultaneously, providing diverse, flexible, two-way transmission services and better communication quality to reduce transmission interruption rates. According to the related protocol specifications, a protocol stack of the 3G mobile telecommunications system can be segmented into access stratum (AS) and non-access stratum (NAS). The AS comprises a Radio Resource Control (RRC), Radio Link Control (RLC), Media Access Control (MAC), Packet Data Convergence Protocol (PDCP), Broadcast/Multicast Control (BMC) and other sub-layers of different functions. Those skilled in the art are familiar with the operation of the above-mentioned sub-layers; therefore, they will not be further mentioned.

Long Term Evolution wireless communications system (LTE system), an advanced high-speed wireless communications system established upon the 3G mobile telecommunications system, supports only packet-switched transmission, and tends to implement both Medium Access Control (MAC) layer and Radio Link Control (RLC) layer in one single communication site, such as in Node B alone rather than in Node B and RNC (Radio Network Controller) respectively, so that the system structure becomes simpler.

A complete protocol specification is accomplished with lasting discussion, editing, and modification. Now, parts of the LTE structure are under Technical Report (TR) stage, meaning that the related protocol specifications are not finished. Therefore, many functions are still For Further Study (FFS).

According to the current system structure of the LTE system, the following can be summarized:
1. For User Plane, the layer structure is, from low to high, PHY (Physical layer), MAC, RLC, and PDCP.
2. For Control Plane, the layer structure is, from low to high, PHY, MAC, RLC, RRC, PDCP, and NAS.
3. For User Plane, ciphering is performed in PDCP.
4. For Control Plane, ciphering and IP for RRC messages are done in RRC and ciphering and IP for NAS messages are done in PDCP.
5. NAS messages may or may not be concatenated with RRC messages.
6. No IP from RRC for non-concatenated messages.
7. IP from RRC for concatenated NAS messages is FFS.
8. Protocol error detection and recovery function is performed in RLC.

Therefore, the prior art does not well specify configuration of signaling radio bearer, and the operation of ciphering from RRC for non-concatenated NAS messages.

This in mind, the present invention aims at providing a method and apparatus for configuring signaling radio bearer in a wireless communications system, so as to enhance information security.

The present invention relates to a method and apparatus for configuring signaling radio bearer in a wireless communications system according to the pre-characterizing clauses of claims 1,4, 7, 10, 13 and 16. The dependent claims pertain to corresponding further developments and improvements.

As will be seen more clearly from the detailed description following below, the claimed method for configuring signaling radio bearers in a wireless communications system comprises performing a first ciphering procedure for a first Non-Access Stratum message to get a second Non-Access Stratum message, performing the first ciphering procedure for a third Non-Access Stratum message to get a fourth Non-Access Stratum message, generating a Radio Resource Control message, which is not ciphered, in a Radio Resource Control layer, combining the second Non-Access Stratum message with the Radio Resource Control message to form a first concatenated message, performing a second ciphering procedure for the first concatenated message to get a second concatenated message, and not combining the fourth Non-Access Stratum message with any Radio Resource Control message to get a non-concatenated message. The method is characterized by not performing the second ciphering procedure for the non-concatenated message, transmitting the non-concatenated message on a first signaling radio bearer, and transmitting the second concatenated message on a second signaling radio bearer, which is different from the first signaling radio bearer.

In the following, the invention is further illustrated by way of example, taking reference to the accompanying drawings. Thereof
Fig. 1 is a function block diagram of a wireless communications device.
Fig. 2 is a diagram of program code of Fig. 1.
Fig. 3 to Fig. 5 are flowcharts of processes according to embodiments of the present invention.

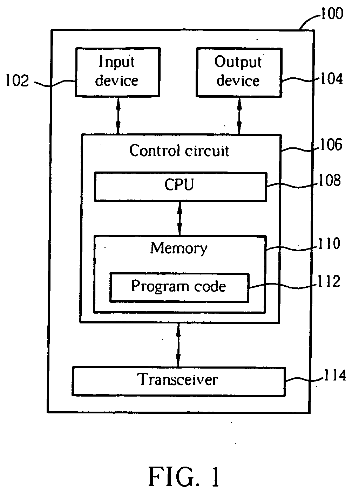

Please refer to Fig. 1, which is a functional block diagram of a communications device 100 in a wireless communications system. The wireless communications system is preferably the LTE system. For the sake of brevity, Fig. 1 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3. Preferably, the communications device 100 is utilized in a third generation (3G) mobile communications system.

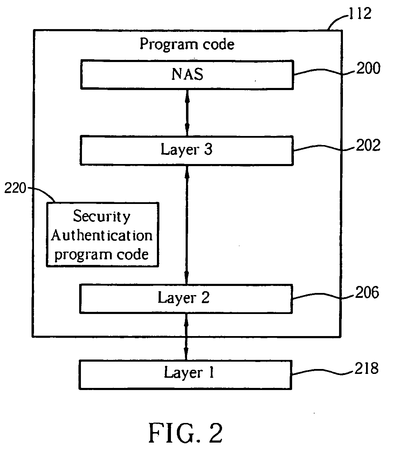

Please continue to refer to Fig. 2. Fig. 2 is a diagram of the program code 112 shown in Fig. 1. The program code 112 includes a Non Access Stratum (NAS) 200, a Layer 3 202, and a Layer 2 206, and is coupled to a Layer 1218. The NAS 200 can generate NAS messages for realizing NAS applications. The Layer 3 202 is preferably composed of an RRC layer and a PDCP layer, for performing resource control. The Layer 2 206 performs link control, and the Layer 1218 performs physical connections.

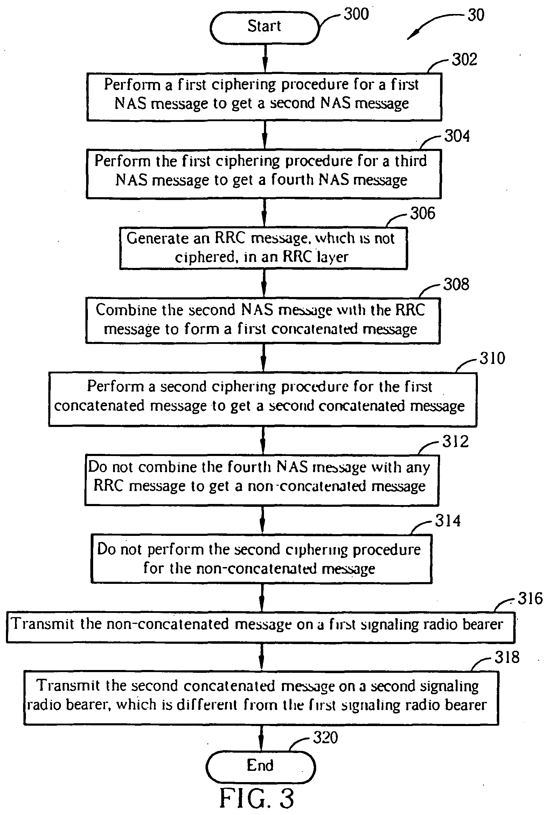

In order to enhance information security, the program code 112 can perform ciphering protection for messages, to protect user data and signaling information from being intercepted by unauthorized devices. In such a situation, the embodiment of the present invention provides a Security Authentication program code 220, for accurately performing ciphering. Please refer to Fig. 3, which illustrates a schematic diagram of a process 30. The process 30 is utilized for performing ciphering in a wireless communications system, and can be compiled into the Security Authentication program code 220. The process 30 comprises the following steps:
Step 300: Start.
Step 302: Perform a first ciphering procedure for a first NAS message to get a second NAS message.
Step 304: Perform the first ciphering procedure for a third NAS message to get a fourth NAS message.
Step 306: Generate an RRC message, which is not ciphered, in an RRC layer.
Step 308: Combine the second NAS message with the RRC message to form a first concatenated message.
Step 310: Perform a second ciphering procedure for the first concatenated message to get a second concatenated message.
Step 312: Do not combine the fourth NAS message with any RRC message to get a non-concatenated message.
Step 314: Do not perform the second ciphering procedure for the non-concatenated message.
Step 316: Transmit the non-concatenated message on a first signaling radio bearer.
Step 318: Transmit the second concatenated message on a second signaling radio bearer, which is different from the first signaling radio bearer.
Step 320: End.

According to the process 30, non-concatenated messages are not performed the second ciphering procedure, and the non-concatenated messages and the concatenated messages are transmitted on different signaling radio bearers. Preferably, the first ciphering procedure is performed by the upper layer of the RRC layer, while the second ciphering procedure is performed by the RRC layer or its lower layer.

In such a situation, via different signaling radio bearers, the RRC layer in the receiver can determine whether the received message is a non-concatenated message or a concatenated message, thus perform deciphering for the concatenated message, and deliver the non-concatenated message to the upper layer without any processing.

Therefore, via the process 30, the embodiment of the present invention can accurately perform ciphering protection procedures for the concatenated message containing the RRC message and the NAS message, and for the non-concatenated message containing only the NAS message, so as to enhance information security.

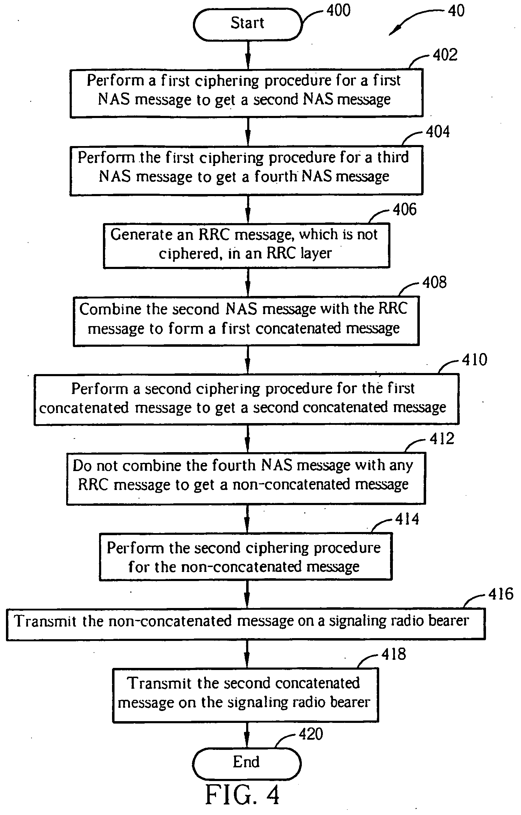

Please refer to Fig. 4, which illustrates a schematic diagram of a process 40. The process 40 is utilized for performing ciphering in a wireless communications system, and can be compiled into the Security Authentication program code 220. The process 40 comprises the following steps:
Step 400: Start.
Step 402: Perform a first ciphering procedure for a first NAS message to get a second NAS message.
Step 404: Perform the first ciphering procedure for a third NAS message to get a fourth NAS message.
Step 406: Generate an RRC message, which is not ciphered, in an RRC layer.
Step 408: Combine the second NAS message with the RRC message to form a first concatenated message.
Step 410: Perform a second ciphering procedure for the first concatenated message to get a second concatenated message.
Step 412: Do not combine the fourth NAS message with any RRC message to get a non-concatenated message.
Step 414: Perform the second ciphering procedure for the non-concatenated message.
Step 416: Transmit the non-concatenated message on a signaling radio bearer.
Step 418: Transmit the second concatenated message on the signaling radio bearer.
Step 420: End.

According to the process 40, non-concatenated messages are performed the second ciphering procedure, and the non-concatenated messages and the concatenated messages are transmitted on the same signaling radio bearer. Preferably, the first ciphering procedure is performed by the upper layer of the RRC layer, while the second ciphering procedure is performed by the RRC layer or its lower layer.

In such a situation, the RRC layer of the receiver does not determine whether a message received on a signaling radio bearer is a non-concatenated message or a concatenated message, and performs deciphering for all the received messages, and then delivers the non-concatenated message to the upper layer.

Therefore, via the process 40, the embodiment of the present invention can accurately perform ciphering protection procedures for the concatenated message containing the RRC message and the NAS message, and for the non-concatenated message containing only the NAS message, so as to enhance information security.

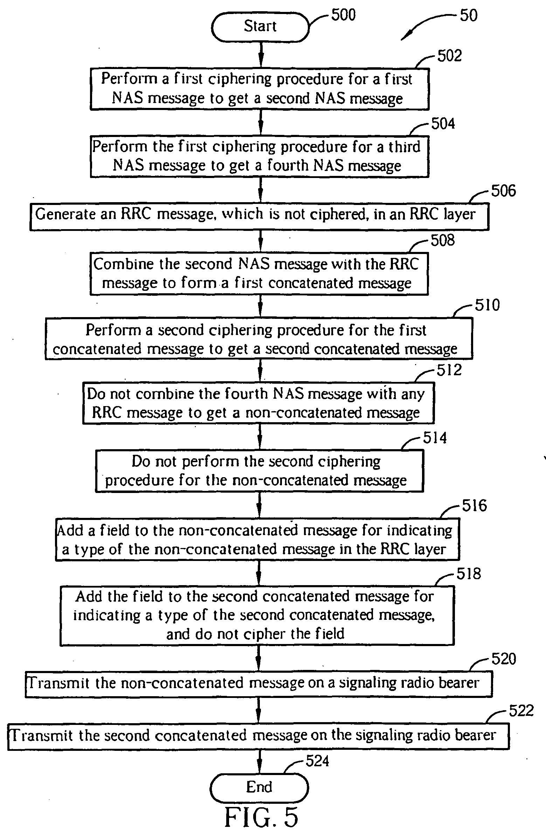

Please refer to Fig. 5, which illustrates a schematic diagram of a process 50. The process 50 is utilized for performing ciphering in a wireless communications system, and can be compiled into the Security Authentication program code 220. The process 50 comprises the following steps:
Step 500: Start.
Step 502: Perform a first ciphering procedure for a first NAS message to get a second NAS message.
Step 504: Perform the first ciphering procedure for a third NAS message to get a fourth NAS message.
Step 506: Generate an RRC message, which is not ciphered, in an RRC layer.
Step 508: Combine the second NAS message with the RRC message to form a first concatenated message.
Step 510: Perform a second ciphering procedure for the first concatenated message to get a second concatenated message.
Step 512: Do not combine the fourth NAS message with any RRC message to get a non-concatenated message.
Step 514: Do not perform the second ciphering procedure for the non-concatenated message.
Step 516: Add a field to the non-concatenated message for indicating a type of the non-concatenated message in the RRC layer.
Step 518: Add the field to the second concatenated message for indicating a type of the second concatenated message, and do not cipher the field.
Step 520: Transmit the non-concatenated message on a signaling radio bearer.
Step 522: Transmit the second concatenated message on the signaling radio bearer.
Step 524: End.

According to the process 50, non-concatenated messages are not performed the second ciphering procedure, and the non-concatenated messages and the concatenated messages are transmitted on the same signaling radio bearer. Preferably, the first ciphering procedure is performed by the upper layer of the RRC layer, while the second ciphering procedure is performed by the RRC layer or its lower layer.

In such a situation, the RRC layer of the receiver can determine whether the received message is a non-concatenated message or a concatenated message according to the field, which is not ciphered, thus perform deciphering for the concatenated message, and deliver the non-concatenated message to the upper layer without any processing.

Therefore, via the process 50, the embodiment of the present invention can accurately perform ciphering protection procedures for the concatenated message containing the RRC message and the NAS message, and for the non-concatenated message containing only the NAS message, so as to enhance information security.

In summary, the embodiment of the present invention provides variable implementations for accurately performing ciphering protection for the concatenated messages and the non-concatenated messages, so as to enhance information security.

## Claims

1. A method for configuring signaling radio bearers in a wireless communications system comprising:
performing a first ciphering procedure for a first Non-Access Stratum message to get a second Non-Access Stratum message;
performing the first ciphering procedure for a third Non-Access Stratum message to get a fourth Non-Access Stratum message;
generating a Radio Resource Control message, which is not ciphered, in a Radio Resource Control layer;
combining the second Non-Access Stratum message with the Radio Resource Control message to form a first concatenated message;
performing a second ciphering procedure for the first concatenated message to get a second concatenated message; and
not combining the fourth Non-Access Stratum message with any Radio Resource Control message to get a non-concatenated message;
wherein the method comprises:
performing the second ciphering procedure for the non-concatenated message;
transmitting the non-concatenated message on a first signaling radio bearer; and
transmitting the second concatenated message on a second signaling radio bearer, which is same as the first signaling radio bearer.

2. The method of claim 1, **characterized in that** the first ciphering procedure is performed by an upper layer of the Radio Resource Control layer.

3. The method of claim 1, **characterized in that** the second ciphering procedure is performed by the Radio Resource Control layer or a lower layer of the Radio Resource Control layer.

4. A communications device for accurately configuring signaling radio bearers in a wireless communications system comprising:
a control circuit for realizing functions of the communications device;
a processor installed in the control circuit, for executing a program code to command the control circuit; and
a memory installed in the control circuit and coupled to the processor for storing the program code;
wherein the program code comprises:
performing a first ciphering procedure for a first Non-Access Stratum message to get a second Non-Access Stratum message;
performing the first ciphering procedure for a third Non-Access Stratum message to get a fourth Non-Access Stratum message;
generating a Radio Resource Control message, which is not ciphered, in a Radio Resource Control entity;
combining the second Non-Access Stratum message with the Radio Resource Control message to form a first concatenated message;
performing a second ciphering procedure for the first concatenated message to get a second concatenated message; and
not combining the fourth Non-Access Stratum message with any Radio Resource Control message to get a non-concatenated message;
wherein the program code further comprises:
performing the second ciphering procedure for the non-concatenated message;
transmitting the non-concatenated message on a first signaling radio bearer; and
transmitting the second concatenated message on a second signaling radio bearer, which is same as the first signaling radio bearer.

5. The communications device of claim 4, **characterized in that** the first ciphering procedure is performed by an upper layer entity of the Radio Resource Control entity.

6. The communications device of claim 4, **characterized in that** the second ciphering procedure is performed by the Radio Resource Control entity or a lower layer entity of the Radio Resource Control entity.

## Patentansprüche

1. Verfahren zum Konfigurieren von Signalisierungsfunkträgern in einem drahtlosen Kommunikationssystem, umfassend:
Durchführen eines ersten Verschlüsselungsvorgangs für eine erste Nachricht einer zugangsgesperrten Schicht, Non-Access-Stratum-Nachricht, um eine zweite Non-Access-Stratum-Nachricht zu erhalten;
Durchführen des ersten Verschlüsselungsvorgangs für eine dritte Non-Access-Stratum-Nachricht um eine vierte Non-Access-Stratum-Nachricht zu erhalten;
Erzeugen einer Funkressourcensteuerungsnachricht, Radio-Resource-Control-Nachricht, die nicht verschlüsselt ist, in einer Funkressourcensteuerungsschicht, Radio-Resource-Control-Schicht;
Kombinieren der zweiten Non-Access-Stratum-Nachricht mit der Funkressourcensteuerungsnachricht, um eine erste verkettete Nachricht zu bilden;
Durchführen eines zweiten Verschlüsselungsvorgangs für die erste verkettete Nachricht, um eine zweite verkettete Nachricht zu erhalten; und
nicht Kombinieren der vierten Non-Access-Stratum-Nachricht mit irgendeiner Funkressourcensteuerungsnachricht, um eine nichtverkettete Nachricht zu erhalten;
wobei das Verfahren umfasst:
Durchführen des zweiten Verschlüsselungsvorgangs für die nichtverkettete Nachricht;
Senden der nichtverketteten Nachricht auf einem ersten Signalisierungsfunkträger; und
Senden der zweiten verketteten Nachricht auf einem zweiten Signalisierungsfunkträger, welcher der gleiche wie der erste Signalisierungsfunkträger ist.

2. Verfahren nach Anspruch 1, **dadurch gekennzeichnet, dass** der erste Verschlüsselungsvorgang durch eine obere Schicht der Funkressourcensteuerungsschicht durchgeführt wird.

3. Verfahren nach Anspruch 1, **dadurch gekennzeichnet, dass** der zweite Verschlüsselungsvorgang durch die Funkressourcensteuerungsschicht oder eine untere Schicht der Funkressourcensteuerungsschicht durchgeführt wird.

4. Kommunikationsvorrichtung zum korrekten Konfigurieren von Signalisierungsfunkträgern in einem drahtlosen Kommunikationssystem, umfassend:
eine Steuerschaltung zum Realisieren von Funktionen der Kommunikationsvorrichtung;
einen Prozessor, der in der Steuerschaltung installiert ist, um einen Programmcode zum Befehligen der Steuerschaltung auszuführen; und
einen Speicher, der in der Steuerschaltung installiert und mit dem Prozessor verbunden ist, zum Speichern des Programmcodes ;
wobei der Programmcode umfasst:
Durchführen eines ersten Verschlüsselungsvorgangs für eine erste Nachricht einer zugangsgesperrten Schicht, Non-Access-Stratum-Nachricht, um eine zweite Non-Access-Stratum-Nachricht zu erhalten;
Durchführen des ersten Verschlüsselungsvorgangs für eine dritte Non-Access-Stratum-Nachricht, um eine vierte Non-Access-Stratum-Nachricht zu erhalten;
Erzeugen einer Funkressourcensteuerungsnachricht, Radio-Resource-Control-Nachricht, die nicht verschlüsselt ist, in einer Funkressourcensteuerungseinheit, Radio-Resource-Control-Einheit;
Kombinieren der zweiten Non-Access-Stratum-Nachricht mit der Funkressourcensteuerungsnachricht, um eine erste verkettete Nachricht zu bilden;
Durchführen eines zweiten Verschlüsselungsvorgangs für die erste verkettete Nachricht, um eine zweite verkettete Nachricht zu erhalten; und
nicht Kombinieren der vierten Non-Access-Stratum-Nachricht mit irgendeiner Funkressourcensteuerungsnachricht, um eine nichtverkettete Nachricht zu erhalten;
wobei der Programmcode ferner umfasst:
Durchführen des zweiten Verschlüsselungsvorgangs für die nichtverkettete Nachricht;
Senden der nichtverketteten Nachricht auf einem ersten Signalisierungsfunkträger; und
Senden der zweiten verketteten Nachricht auf einem zweiten Signalisierungsfunkträger, welcher der gleiche wie der erste Signalisierungsfunkträger ist.

5. Kommunikationsvorrichtung nach Anspruch 4, **dadurch gekennzeichnet, dass** der erste Verschlüsselungsvorgang durch eine Einheit einer oberen Schicht der Funkressourcensteuereinheit durchgeführt wird.

6. Kommunikationsvorrichtung nach Anspruch 4, **dadurch gekennzeichnet, dass** der zweite Verschlüsselungsvorgang durch die Funkressourcensteuereinheit oder eine Einheit einer unteren Schicht der Funkressourcensteuereinheit durchgeführt wird.

## Revendications

1. Procédé pour configurer des supports radio de signalisation dans un système de communications sans fil comprenant le fait :
d'effectuer une première procédure de chiffrement pour un premier message de Strate de Non-Accès afin d'obtenir un deuxième message de Strate de Non-Accès ;
d'effectuer la première procédure de chiffrement pour un troisième message de Strate de Non-Accès afin d'obtenir un quatrième message de Strate de Non-Accès ;
de générer un message de Commande de Ressource Radio, qui n'est pas chiffré, dans une couche de Commande de Ressource Radio ;
de combiner le deuxième message de Strate de Non-Accès avec le message de Commande de Ressource Radio afin de former un premier message concaténé ;
d'effectuer une deuxième procédure de chiffrement pour le premier message concaténé afin d'obtenir un deuxième message concaténé ; et
de ne combiner le quatrième message de Strate de Non-Accès avec aucun message de Commande de Ressource Radio afin d'obtenir un message non concaténé ;
dans lequel le procédé comprend le fait :
d'effectuer la deuxième procédure de chiffrement pour le message non concaténé ;
de transmettre le message non concaténé sur un premier support radio de signalisation ; et
de transmettre le deuxième message concaténé sur un deuxième support radio de signalisation, qui est identique au premier support radio de signalisation.

2. Procédé de la revendication 1, **caractérisé en ce que** la première procédure de chiffrement est effectuée par une couche supérieure de la couche de Commande de Ressource Radio.

3. Procédé de la revendication 1, **caractérisé en ce que** la deuxième procédure de chiffrement est effectuée par la couche de Commande de Ressource Radio ou une couche inférieure de la couche de Commande de Ressource Radio.

4. Dispositif de communications pour configurer avec précision des supports radio de signalisation dans un système de communications sans fil comprenant :
un circuit de commande pour réaliser des fonctions du dispositif de communications ;
un processeur installé dans le circuit de commande, pour exécuter un code de programme afin de commander le circuit de commande ; et
une mémoire installée dans le circuit de commande et couplée au processeur pour stocker le code de programme ;
dans lequel le code de programme comprend le fait :
d'effectuer une première procédure de chiffrement pour un premier message de Strate de Non-Accès afin d'obtenir un deuxième message de Strate de Non-Accès ;
d'effectuer la première procédure de chiffrement pour un troisième message de Strate de Non-Accès afin d'obtenir un quatrième message de Strate de Non-Accès ;
de générer un message de Commande de Ressource Radio, qui n'est pas chiffré, dans une entité de Commande de Ressource Radio ;
de combiner le deuxième message de Strate de Non-Accès avec le message de Commande de Ressource Radio afin de former un premier message concaténé ;
d'effectuer une deuxième procédure de chiffrement pour le premier message concaténé afin d'obtenir un deuxième message concaténé ; et
de ne combiner le quatrième message de Strate de Non-Accès avec aucun message de Commande de Ressource Radio afin d'obtenir un message non concaténé ;
dans lequel le code de programme comprend en outre le fait :
d'effectuer la deuxième procédure de chiffrement pour le message non concaténé ;
de transmettre le message non concaténé sur un premier support radio de signalisation ; et
de transmettre le deuxième message concaténé sur un deuxième support radio de signalisation, qui est identique au premier support radio de signalisation.

5. Dispositif de communications de la revendication 4, **caractérisé en ce que** la première procédure de chiffrement est effectuée par une entité de couche supérieure de l'entité de Commande de Ressource Radio.

6. Dispositif de communications de la revendication 4, **caractérisé en ce que** la deuxième procédure de chiffrement est effectuée par l'entité de Commande de Ressource Radio ou une entité de couche inférieure de l'entité de Commande de Ressource Radio.
